# EUROPÄISCHE PATENTSCHRIFT

(11) **EP 4 167 329 B1**
(45) Veröffentlichungstag und Bekanntmachung des Hinweises auf die Patenterteilung: **19.02.2025**
(21) Anmeldenummer: 21202414.5
(22) Anmeldetag: 13.10.2021
(51) Int. Cl.: H01M 10/04, H01M 50/224, H01M 50/236, H01M 50/238, H01M 50/242, H01M 50/249

(54) **BATTERIETRÄGER FÜR EIN ELEKTRISCH ANGETRIEBENES FAHRZEUG UND VERFAHREN ZUM HERSTELLEN EINES SOLCHEN BATTERIETRÄGERS**
BATTERY CARRIER FOR AN ELECTRICALLY DRIVEN VEHICLE AND METHOD FOR MANUFACTURING SUCH A BATTERY CARRIER
PORTE-BATTERIE POUR UN VÉHICULE ÉLECTRIQUE ET PROCÉDÉ DE FABRICATION D'UN TEL PORTE-BATTERIE

(43) Veröffentlichungstag der Anmeldung: 19.04.2023
(73) Patentinhaber: Nemak, S.A.B. de C.V., 66017 García, Nuevo León (MX)
(72) Erfinder: SCHÜDDEKOPF, Sven, 37077 Göttingen (DE); FRANZMANN, Richard, 60487 Frankfurt/ Main (DE); SCHEIL, Jan, 65185 Wiesbaden (DE); KREUTZAREK, Udo, 78224 Singen (DE)
(74) Vertreter: Cohausz & Florack

(56) Entgegenhaltungen:
- CN-A- 112 531 261
- DE-A1- 102017 102 685
- DE-A1- 102017 120 533
- DE-A1- 102019 101 637
- DE-B4- 102011 101 586
- JP-A- 2021 068 523

## Beschreibung

Die Erfindung betrifft einen Batterieträger, der zum Befestigen in einem Bodenbereich einer Tragstruktur eines elektrisch angetriebenen Kraftfahrzeugs vorgesehen ist, wobei der Batterieträger mit einem Bodenabschnitt und einem um den Bodenabschnitt umlaufenden Seitenwandabschnitt einen Aufnahmeraum für dort zu positionierende Batterieelemente umgrenzt.

Ebenso betrifft die Erfindung ein Verfahren zum Herstellen eines solchen Batterieträgers.

Batterieträger der hier in Rede stehenden Art, in der Fachsprache auch "Battery Tray" genannt, nehmen die Speicher auf, in der die zum Antrieb des Kraftfahrzeugs benötigte elektrische Energie gespeichert wird. Diese üblicherweise wiederaufladbaren Energiespeicher werden im allgemeinen Sprachgebrauch synonym als "Batterien" oder "Akkumulatoren" bezeichnet. Im vorliegenden Text wird der Einfachheit halber deshalb für die Bezeichnung der betreffenden Energiespeicher durchgängig der Begriff "Batterie" verwendet. Batterien dieser Art sind dabei üblicherweise aus mehreren zellenartigen Batterieelementen zusammengesetzt.

Anders als bei den bei Kraftfahrzeugen mit Verbrennungsmotoren eingesetzten, typischerweise mit Spannungen von 12 V oder 24 V betriebenen Batterien liegt bei Batterien, in denen die elektrische Energie für den Antrieb von Elektrofahrzeugen gespeichert wird, Hochspannung an, die typischerweise im Bereich von 300 - 1000 V liegt. Stand der Technik sind Lithium-Ionen-Batterien, die eine hohe Energiedichte ermöglichen und sich gleichzeitig durch eine vergleichbar lange Lebensdauer auszeichnen. Allerdings sind derartige Li-lonen-Batterien empfindlich gegen mechanische und thermische Belastungen. Schäden an den Batterieelementen können zu Bränden und zum Austritt giftiger Bestandteile führen. Diese giftigen Bestandteile können eine erhebliche Gefährdung darstellen, wenn sie unkontrolliert in die freie Umgebung gelangen. Kommt beispielsweise das hochreaktive Lithium-Metall einer Li-lonen-Batterie mit Wasser in Kontakt, so werden die Wassermoleküle in ihre Bestandteile Wasserstoff und Sauerstoff zersetzt, die ein hoch-explosionsgefährdetes Gasgemisch bilden.

Aus diesen Gründen müssen Batterieträger der hier in Rede stehenden Art so ausgelegt werden, dass sich nicht nur im normalen Fahrbetrieb und bei einem Unfall die in ihnen angeordneten Batterieelemente gegen mechanische Beschädigung schützen lassen, sondern auch sicher verhindern, dass bei einer Leckage Inhaltsstoffe der Batterieelemente in die Umgebung gelangen.

Ein Beispiel für einen Batterieträger, der diese Anforderungen erfüllen soll, ist in der EP 2 468 609 A2 beschrieben. Die dort vorgestellte Tragstruktur für ein elektrisch betriebenes Fahrzeug umfasst ein Bodenteil, das einen nach Art einer Leiter ausgebildeten, rechteckigen und sich in Längsrichtung der Tragstruktur erstreckenden Rahmen aufweist. Der Rahmen Fächer, in denen jeweils eine plattenförmige Batterie eingelegt werden kann. An seinen schmalen Seiten hat der Rahmen jeweils einen Koppelabschnitt, über den das Batteriegehäuse mit anderen Bauteilen der Tragstruktur, wie Profile zum Ankoppeln an die Achsaggregate oder die Außenhaut des Fahrzeugs, verbunden ist. Zum Schutz der Batterien gegen Beschädigung durch Steinschlag und desgleichen ist der Rahmen an seiner Unterseite mit einer Platte abgedeckt. Ebenso liegt auf dem Rahmen eine Abdeckung, um im Fall eines Defekts der Batterien die Insassen des Fahrzeugs gegen aus den Batterien austretende Dämpfe oder desgleichen zu schützen.

Eine gegenüber diesem Stand der Technik vereinfachte Herstellung erlaubt die in der DE 10 2019 101 637 A1 beschriebene Gestaltung eines Batterieträgers für ein Elektrofahrzeug. Dieser die gattungsbildenden Merkmale der Erfindung aufweisende Batterieträger umgrenzt nach Art einer Wanne mit seinem Boden sowie einer um den Boden umlaufenden Seitenwand einen Aufnahmeraum, in dem zum Gebrauch die Batterieelemente angeordnet werden. Dabei ist zumindest ein Segment der Wanne, bevorzugt die gesamte Wanne, als Faltbauteil einstückig und werkstoffeinheitlich aus einer Platine hergestellt. Gleichzeitig ist in dem Boden der Wanne zumindest eine sich über die Breite oder Länge eingeformte Sicke ausgebildet, dergestalt, dass die Sicke als eingeformter Querträger oder Längsträger fungiert und als Versteifung oder als Anbindungsfläche für die Montage der Batterieelemente dient. Für die Herstellung des so gestalteten Batterieträgers wird ein ebener, geeignet geformter Blechzuschnitt bereitgestellt, bei dem im Bereich der zu erzeugenden Sicken Ausschnitte in die später die Seitenwandabschnitte des Batterieträgers bildenden Abschnitte geschnitten sind. Aus dem derart vorbereiteten Zuschnitt wird durch verschiedene Faltoperationen entlang vorgegebener Kantlinien der Batterieträger so geformt, dass die Sicken in dem Boden ausgebildet und die Seitenwandabschnitte senkrecht von dem Boden abstehen. Die Fügestellen, an denen jeweils zwei Seitenwandabschnitte oder ein Seitenwandabschnitt und ein Ende einer der Sicken aufeinandertreffen, werden abschließend miteinander gefügt, wobei die Verbindung zwischen den miteinander gefügten Teilen vorzugweise als stoffschlüssige Verbindung, insbesondere als Verschweißung ausgeführt wird.

Aus CN 112531261 A ist ein Batteriepack umfassend ein Stanzbecken bekannt, wobei das Stanzbecken einen Aufnahmeraum bildet und wobei der Aufnahmeraum durch Stahlstabträger in eine Vielzahl von Unteraufnahmeräumen unterteilt ist.

Die DE 10 2017 120 533 A1 betrifft einen Batterieträger für ein Elektrokraftfahrzeug aufweisend eine Wanne zur Aufnahme von Batterien sowie optional einen Deckel zum Verschließen der Wanne, wobei die Wanne als Blechbauteil mit mindestens zwei gegenüberliegenden Seitenwänden, welche einstückig und werkstoffeinheitlich aus einer Blechplatine mit dem Boden hergestellt sind, ausgebildet ist.

Aus JP 2021-68523 A ist eine Batterieaufnahmeeinheit umfassend einen Behälterkörper, einen Deckel und mindestens ein inneres Verstärkungsmaterial bekannt. Der Behälterkörper ist aus einem tiefgezogenen Produkt aus einer Aluminiumlegierung der Serie 5000 gebildet und weist eine Bodenwand und eine Umfangswand auf, die einstückig mit der Bodenwand verbunden ist. Der Deckel ist auf dem Behälterkörper montiert, um den Innenraum des Behälters an einer Position oberhalb des Behälterkörpers abzudecken. Das innere Verstärkungsmaterial besteht aus einer Aluminiumlegierung der 7000er-Reihe.

Die DE 10 2017 102 685 A1 betrifft eine Wanne für einen Batterieträger zur Anordnung an einem Elektrokraftfahrzeug, wobei der Batterieträger zur Aufnahme mindestens einer Batterie geeignet ist und die Wanne als aus einer Aluminiumlegierung tiefgezogenes Blechumformbauteil mit einem Boden und in einem Winkel α zu dem Boden angeordneten Wänden hergestellt ist.

Vor dem Hintergrund des voranstehend erläuterten Standes der Technik hat sich die Aufgabe ergeben, einen Batterieträger zu schaffen, der strengste Anforderungen an die gas- und flüssigkeitsdichte Abschirmung und den Schutz der Batterien gegen mechanische Beschädigung erfüllt und gleichzeitig einfach herstellbar ist.

Ebenso sollte ein Verfahren zur Herstellung eines solchen Batterieträgers angegeben werden.

Die Erfindung hat diese Aufgabe durch einen Batterieträger gelöst, der mindestens die in Anspruch 1 angegebenen Merkmale aufweist.

Ebenso hat die Erfindung diese Aufgabe durch das in Anspruch 8 angegebene Verfahren gelöst.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßer Batterieträger, der zum Befestigen in einem Bodenbereich einer Tragstruktur eines elektrisch angetriebenen Kraftfahrzeugs vorgesehen ist, umgrenzt somit mit einem Bodenabschnitt und einer um den Bodenabschnitt umlaufenden Seitenwand einen Aufnahmeraum für mindestens ein dort zu positionierendes Batterieelement. Dabei umfasst die Seitenwand mindestens zwei Seitenwandabschnitte, die unter einem Winkel von mehr als 0° gegenüber dem Bodenabschnitt angewinkelt ausgerichtet sind und in einem Eckbereich aufeinandertreffen

Erfindungsgemäß ist nun bei einem solchen Batterieträger der Bodenabschnitt des Batterieträgers in einem Stück aus einem ersten Aluminiumwerkstoff geformt. Gleichzeitig sind von der Seitenwand zumindest jeweils in einem der Eckbereiche aufeinandertreffende Seitenwandabschnitte einschließlich des jeweiligen Eckbereichs in einem Stück aus einem zweiten Aluminiumwerkstoff geformt, der eine gegenüber dem ersten Aluminiumwerkstoff höhere Bruchdehnung A aufweist.

Typischerweise weist der erfindungsgemäß für den Bodenabschnitt eingesetzte erste Aluminiumwerkstoff eine Zugfestigkeit Rm von mindestens 170 MPa (Rm ≥ 170 MPa), beispielsweise mindestens 220 MPa (Rm ≥ 220 MPa), insbesondere mindestens 240 MPa (Rm ≥ 240 MPa), und eine Bruchdehnung A bis zu 10 % (A ≤ 10 %), insbesondere bis zu 8 % (A ≤ 8%), auf. Aluminiumwerkstoffe mit einem solchen Eigenschaftsspektrum werden in der Fachwelt, wie auch im vorliegenden Text, als "hochfeste Aluminiumwerkstoffe" bezeichnet.

Dagegen beträgt die Bruchdehnung A des zweiten Aluminiumwerkstoffs, aus dem die in einem Eckbereich aufeinander treffenden Seitenwandabschnitte und der betreffende Eckbereich selbst in einem Stück geformt sind, typischerweise mindestens 10 % (A ≥ 10), insbesondere mindestens 15 % (A ≥ 15 %). Aluminiumwerkstoffe mit einer derart hohen Bruchdehnung A werden in der Fachsprache, wie auch im vorliegenden Text, als "duktile Aluminiumwerkstoffe" bezeichnet.

In diesem Sinne besteht der Bodenabschnitt eines erfindungsgemäßen Batterieträgers somit aus einem hochfesten Aluminiumwerkstoff, während mindestens die in einem Eckbereich aufeinandertreffenden Seitenwandabschnitte und der betreffende, in einem Stück mit ihnen geformte Eckbereich aus einem duktilen Aluminiumwerkstoff bestehen.

Ein erfindungsgemäßer Batterieträger zeichnet sich demnach dadurch aus, dass er vollständig aus Aluminiumwerkstoffen gefertigt ist. Dies verleiht ihm gegenüber konventionellen Stahlblechkonstruktionen ein deutlich geringeres Gewicht.

Die Erfindung geht hierbei von der Überlegung aus, für den Bodenabschnitt, der im Gebrauch den größten Belastungen durch Steinschlag und ähnliches ausgesetzt ist und zudem das Gewicht der Batterieelemente tragen muss, einen Al-Werkstoff zu verwenden, der eine hohe Festigkeit besitzt und als solcher die auf ihn wirkenden mechanischen Belastungen sicher ertragen kann. Dagegen sind zusätzliche komplex geformte oder umformtechnisch schwierig zu erzeugende Formelemente in den Bereich derjenigen Seitenwandabschnitte des Batterieträgers verlegt, die aus einem Aluminiumwerkstoff mit gegenüber dem Werkstoff des Bodenabschnitts erhöhten Dehnungseigenschaften und dementsprechend optimierter Verformbarkeit bestehen. Auf diese Weise gelingt es, trotz der für eine komplexe Formgebung ungenügenden Verformbarkeit des aus höherfestem Al-Werkstoff bestehenden Bodenabschnitts den erfindungsgemäßen Batterieträger durch Umformen in einem Stück aus einem geeignet geformten Blechzuschnitt zu formen.

Der besondere Vorteil dieser Vorgehensweise besteht darin, dass es für die Herstellung des Batterieträgers nicht mehr erforderlich ist, bestimmte Abschnitte des Batterieträgers in separaten Arbeitsschritten getrennt voneinander vorzuformen und diese dann nachträglich miteinander zu fügen, insbesondere zu verschweißen oder zu verkleben. Stattdessen kann für die Herstellung eines erfindungsgemäßen Batterieträgers eine Blechplatine verwendet werden, deren aus unterschiedlichen Al-Werkstoffen bestehende Abschnitte mit dafür bewährten Fügetechniken, insbesondere Schweiß- oder Klebetechniken, so miteinander verbunden werden, dass ein fester und dichter Zusammenhalt dieser Abschnitte auch nach der Verformung der Platine zu dem Batterieträger gewährleistet ist.

Die Erfindung nutzt insoweit das auf der Verwendung von so genannten Tailored-Welded-Blanks aufsetzende, in der Praxis bewährte Prinzip der Herstellung von Bauteilen, an die lokal unterschiedliche Anforderungen gestellt werden (siehe beispielsweise DE 10 2011 101 586 B4). Dabei gelingt es mit der Erfindung nicht nur, einen Batterieträger von geringem Gewicht zur Verfügung zu stellen, der die an seine Belastbarkeit gestellten Anforderungen sicher erfüllt. Vielmehr ist bei einem erfindungsgemäßen Batterieträger die Dichtheit der Verbindung der einzelnen Abschnitte untereinander stets gewährleistet. Dies wird nicht zuletzt dadurch erreicht, dass die hinsichtlich der Formgebung und Rissbildung besonders kritischen Eckbereiche des Batterieträgers sich ausschließlich in den Seitenwandabschnitten befinden, die aus duktilem, gut verformbarem Aluminium-Werkstoff bestehen. Auf diese Weise ist trotz der im Gebrauch unvermeidbar auftretenden Verformungen und den damit einhergehend im Batterieträger auftretenden Spannungen eine dauerhaft dichte Abschirmung der im Batterieträger angeordneten Batterieelemente gegenüber der Umgebung gewährleistet.

Den voranstehenden Erläuterungen entsprechend umfasst ein erfindungsgemäßes Verfahren zum Herstellen eines Batterieträgers, der zum Befestigen in einem Bodenbereich einer Tragstruktur eines elektrisch angetriebenen Kraftfahrzeugs vorgesehen ist, wobei der Batterieträger mit einem Bodenabschnitt und einer um den Bodenabschnitt umlaufenden Seitenwand einen Aufnahmeraum für dort zu positionierende Batterieelemente umgrenzt und wobei die Seitenwand mindestens zwei Seitenwandabschnitte umfasst, die unter einem Winkel ß von mehr als 0° gegenüber dem Bodenabschnitt angewinkelt ausgerichtet sind und in einem Eckbereich aufeinandertreffen, folgende Arbeitsschritte:
a) Bereitstellen einer Blechplatine, die einen zentralen Abschnitt, der aus einem ersten Aluminiumwerkstoff besteht, und mindestens zwei Seitenabschnitte umfasst, die mit ihrem jeweils zugeordneten Rand an einander gegenüberliegende Ränder des zentralen Abschnitts gefügt sind und zumindest abschnittsweise aus einem zweiten Aluminiumwerkstoff bestehen, wobei der erste Aluminiumwerkstoff eine Bruchdehnung A aufweist, die geringer ist als die Bruchdehnung A des zweiten Aluminiumwerkstoffs;
b) Umformen der Blechplatine zu dem Batterieträger unter Ausbildung eines Bodenabschnitts und einer um den Bodenabschnitt umlaufenden Seitenwand des Batterieträgers , wobei im Zuge der Umformung die Eckbereiche, in denen zwei Seitenwandabschnitte der Seitenwand aufeinander treffen, ausschließlich aus den aus dem zweiten Aluminiumwerkstoff bestehenden Abschnitten der Blechplatine geformt werden;
c) Optionales Beschneiden eines Randbereichs der umlaufenden Seitenwand;
d) Optionales zusätzliches Umformen der Seitenwand oder des Bodenabschnitts zur Ausprägung mindestens eines zusätzlichen Formelements;
e) Optionales Einbringen von Öffnungen in den Batterieträger.

Der zentrale, aus dem höherfesten Al-Werkstoff bestehende Bodenabschnitt eines erfindungsgemäßen Batterieträgers ist beispielsweise im Wesentlichen eben ausgebildet, so dass er bei der Formgebung des Batterieträgers allenfalls mit geringen Umformgraden verformt wird. Dabei kann der Bodenabschnitt selbstverständlich erforderlichenfalls mit Sicken und vergleichbaren Formelementen versehen werden, die trotz der eingeschränkten Verformbarkeit des höherfesten Werkstoffs abbildbar sind, aus dem der Bodenabschnitt besteht. Solche Formelemente können beispielsweise die Formsteifigkeit des Bodenabschnitts verbessern oder die Befestigung und Ausrichtung der im Batterieträger anzuordnenden Batterieelemente erleichtern.

Ebenso kann der zentrale Abschnitt der Blechplatine so ausgelegt werden, dass er nicht nur den Bodenabschnitt eines erfindungsgemäßen Batterieträgers bildet, sondern auch mindestens einen Abschnitt der Seitenwand, der beispielsweise eine besondere Festigkeit aufweisen soll. Dies bietet sich insbesondere dann an, wenn der betreffende Wandabschnitt einfach geformt ist, also beispielsweise nur gerade, parallel verlaufende Seitenwände bzw. Kanten aufweist. Diese sollten optimalerweise in so großen Biegeradien in den jeweils benachbarten Seitenwandabschnitt oder den Bodenabschnitt übergehen, dass eine Rissbildung sicher vermieden ist. Die hierzu geeigneten Geometrien können in bekannter Weise in Abhängigkeit von den Festigkeits- und Dehnungseigenschaften des für den Bodenabschnitt verwendeten Aluminiumwerkstoffs bestimmt werden.

Dementsprechend sieht eine praxisgerechte, das Potenzial der beiden erfindungsgemäß verarbeiteten, unterschiedlich festen und unterschiedlich duktilen Aluminiumwerkstoffe optimal nutzende Ausführung der Erfindung vor, dass der Batterieträger an zwei gegenüberliegenden Seiten jeweils einen höherfesten Seitenwandabschnitt aufweist, der in einem Stück mit dem Bodenabschnitt aus dem höherfesten Aluminiumwerkstoff des Bodenabschnitts geformt ist, wobei jeweils einer der duktilen Seitenwandabschnitte, die zwischen sich einen Eckbereich des Batterieträgers haben, eine Verlängerung des jeweiligen höherfesten Seitenwandabschnitts bildet, die sich insbesondere längs des Bodenabschnitts erstrecken kann.

So kann der Bodenabschnitt eines erfindungsgemäßen Batterieträgers, in Draufsicht betrachtet, beispielsweise eine rechteckige Grundform aufweisen, bei der sich an zueinander gegenüberliegenden Längsseiten des Bodenabschnitts jeweils ein höherfester Seitenwandabschnitt erstreckt, wobei die höherfesten Seitenabschnitte an ihren den Eckbereichen des Batterieträgers zugeordneten Seiten jeweils durch einen mit ihnen gefügten, insbesondere verschweißten, duktilen Seitenwandabschnitt verlängert sind.

Auch bei den Ausgestaltungen der Erfindung, bei dem die Seitenwand des Batterieträgers mindestens einen Seitenwandabschnitt aufweist, der einstückig mit dem Bodenabschnitt aus einem höherfesten Aluminiumwerkstoff gebildet ist, sind auf diese Weise die hinsichtlich des Umformverhaltens, insbesondere der Gefahr von Rissbildung, kritischen Eckbereiche in den Abschnitt des Batterieträgers bzw. der zu seiner Herstellung verwendeten Blechplatine verlegt, die aus dem gut verformbaren, duktilen Aluminiumwerkstoff besteht.

Zum Fügen des aus dem ersten, höherfesten, Al-Werkstoff bestehenden Bodenabschnitts mit den aus dem zweiten, duktilen, Al-Werkstoff bestehenden Seitenwandabschnitten können alle aus der Praxis für diese Zwecke bekannten Fügeverfahren genutzt werden. Hierzu zählen insbesondere Schweißverfahren, wie Laserschweiß- oder Reibrührschweißverfahren, aber auch Klebeverfahren oder andere bekannte Verfahren, mittels der die miteinander zu fügenden, aus unterschiedlichen Werkstoffen bestehenden Abschnitte durch Stoff-, Kraft- und/oder Formschluss miteinander dauerhaft dicht und fest verbunden werden können.

Bei einer Blechplatine, mit der es gelingt, einen Batterieträger entsprechend den voranstehenden Erläuterungen zu formen, erstreckt sich der zentrale Abschnitt der im Arbeitsschritt a) des erfindungsgemäßen Verfahrens bereitgestellten Blechplatine über die gesamte Breite der Blechplatine, jedoch nur über ein Teilstück der Länge der Blechplatine, wobei bei der Umformung im Arbeitsschritt b) des erfindungsgemäßen Verfahrens die zueinander gegenüberliegenden, sich zwischen den duktilen Seitenabschnitten der Blechplatine erstreckenden Randabschnitte des zentralen Abschnitts zu jeweils einem höherfesten Seitenwandabschnitt des Batterieträgers umgeformt werden.

Für die Umformung erfindungsgemäß konfigurierter Blechplatinen zu einem erfindungsgemäßen Batteriegehäuse eignen sich insbesondere alle bekannten, für die Umformung von Welded Tailored Blanks bewährten Tiefziehverfahren, wie sie beispielsweise auch beim aus der schon erwähnten DE 10 2011 101 586 B4 bekannten Stand der Technik zum Einsatz kommen.

Wenn im vorliegenden Text mechanische Eigenschaften von Aluminiumwerkstoffen, wie Zugfestigkeit Rm oder Bruchdehnung A, angegeben sind, so sind diese jeweils normgemäß entsprechend DIN EN ISO 6892-1:2020-06 und DIN 50125:2016-12ermittelt worden.

Der zwischen dem Bodenabschnitt und der umlaufenden Seitenwand eines erfindungsgemäßen Batterieträgers eingeschlossene Winkel ß ist jeweils größer 0°, was bedeutet, dass der Bodenabschnitt und der umlaufende Seitenwandabschnitt in zueinander winkelig ausgerichteten Ebenen verlaufen. Typischerweise liegt der Winkel ß im Bereich von 80° bis 135°, insbesondere 85° bis 120°, wobei Winkel ß von ≥ 90° aus fertigungstechnischer Sicht besonders praxisgerecht sind. Es versteht sich dabei von selbst, dass die hier zum Winkel ß gemachten Angaben nicht im streng mathematischen Sinne, sondern im technischen Sinne zu verstehen, d.h. mit den fertigungstechnisch unvermeidbaren, in der Praxis üblicherweise zugelassenen Toleranzen auszulegen sind.

Als erster, höherfester, Al-Werkstoff für den Bodenabschnitt sind beispielsweise alle Al-Legierungen geeignet, die den nach der von der Aluminum Association entwickelten Nomenklatur in die 6000er, 7000er oder 8000er-Serien der Aluminiumwerkstoffe eingeordnet sind. Als besonders geeignet haben sich dabei die Werkstoffe der 6000er-Serie herausgestellt. Hierzu gehören beispielsweise die Werkstoffe EN AW-6101, EN AW-6101A, EN AW-6101B, EN AW-6201, EN AW-6401, EN AW-6003, EN AW-6005, EN AW-6005A, EN AW-6005B, EN AW-6106, EN AW-6008, EN AW-6110A, EN AW-6011, EN AW-6012, EN AW-6012A, EN AW-6013, EN AW-6014 EN, AW-6015, EN AW-6016, EN AW-6018, EN AW-6023, EN AW-6025, EN AW-6026, EN AW 6050, EN AW-6351, EN AW-6351A, EN AW-6951, EN AW-6056, EN AW-6060, EN AW-6360, EN AW-6061A, EN AW-6261, EN AW-6262, EN AW-6262A, EN AW-6063, EN AW-6063A, EN AW-6463, EN AW-6064A, EN AW-6065, EN AW-6081, AW-6181, EN AW-6082, EN AW-6182, EN AW-6082A.

Die voranstehend genannten Legierungen erfüllen die erfindungsgemäß an den höherfesten Aluminiumwerkstoff des Bodenabschnitts hinsichtlich dessen Zugfestigkeit Rm von mindestens 170 MPa (Rm ≥ 170 MPa), insbesondere mindestens 220 MPa (Rm ≥ 220 MPa), und der Bruchdehnung A von weniger als 10 % (A ≤ 10 %), insbesondere weniger als 9 % (A < 10 %), wie beispielsweise bis zu 8 % (A ≤ 8 %) oder bis zu 7 % (A ≤ 7%), gestellten Anforderungen. Dabei haben sich solche höherfesten Al-Werkstoffe besonders bewährt, deren Zugfestigkeit Rm mindestens 240 MPa, insbesondere mindestens 250 MPa, beträgt.

In der Regel gilt, dass mit zunehmender Zugfestigkeit Rm die Bruchdehnung A und damit einhergehend die Verformbarkeit abnimmt. So weisen erfindungsgemäß bevorzugt für den Bodenabschnitt eingesetzte Al-Werkstoffe bei einer Zugfestigkeit Rm von mindestens 250 MPa typischerweise nur noch eine Bruchdehnung A von bis zu 7 % (A ≤ 7 %) auf. Zugfestigkeiten von bis zu 250 MPa (Rm ≥ 250 MPa) und Bruchdehnungen A von bis zu 7 % (A ≤ 7 %) der für den höherfesten Bodenabschnitt eines erfindungsgemäßen Batterieträgers vorgesehenen hochfesten Al-Werkstoffe erweisen sich mit Blick auf die an ihre Festigkeit und Dehnbarkeit gestellten Anforderungen als besonders geeignet für die erfindungsgemäßen Zwecke. Beispiele für Al-Werkstoffe, die die von der Erfindung an den Werkstoff des zentralen Bodenabschnitts gestellten Anforderungen erfüllen, sind beispielsweise die unter der Bezeichnung EN AW-6003, EN AW-6005, EN AW-6005A, EN AW-6005B, EN AW-6060, EN AW-6061A, EN AW-6063, EN AW-6063A.

Für die aus dem zweiten, duktilen, Al-Werkstoff bestehenden Seitenwandabschnitte und Eckbereiche der Seitenwand eines erfindungsgemäßen Batterieträgers werden dagegen solche Werkstoffe eingesetzt, die eine Bruchdehnung A von mindestens 10 % (A ≥ 10 %), insbesondere mindestens 15 % (A ≥ 15 %), bevorzugt mindestens 20 % (A ≥ 20 %), aufweisen. Die Zugfestigkeit Rm dieser Werkstoffe liegt typischerweise bei höchstens 240 MPa (Rm ≤ 240 MPa), insbesondere höchstens 230 MPa (Rm ≤ 230 MPa), wobei Zugfestigkeiten von 180 MPa bis 240 MPa (180 MPa ≤ Rm ≤ 240 MPa), insbesondere bis 230 MPa (Rm ≤ 230 MPa, insbesondere 180 MPa ≤ Rm ≤ 230 MPa), und Bruchdehnungen A von 13 % bis 28 % (13 % ≤ A ≤ 28 %) besonders praxisgerecht sind.

Duktile Al-Werkstoffe, die die Anforderungen erfüllen, welche die Erfindung an die Seitenwandabschnitte stellt, gehören gemäß der Nomenklatur der Aluminum Association in die 3000er-, 4000er- oder 5000er-Serie von Al-Werkstoffen. Insbesondere die Werkstoffe der 5000er-Serie haben sich hier bewährt. Zu dieser Serie gehören die Werkstoffe EN AW-5005, EN AW-5005A, EN AW-5305, EN AW-5505, EN AW-5605, EN AW-5006, EN AW-5010, EN AW-5110, EN AW-5210, EN AW-5310, EN AW-5018, EN AW-5018B, EN AW-5019, EN AW-5119, EN AW-5119A, EN AW-5026, EN AW-5040, EN AW-5042, EN AW-5049, EN AW-5149, EN AW-5249, EN AW-5449, EN AW-5449A, EN AW-5050, EN AW-5050A, EN AW-5051A, EN AW-5251, EN AW-5052, EN AW-5252, EN AW-5352, EN AW-5154A, EN AW-5154B, EN AW-5354, EN AW-5454, EN AW-5554, EN AW-5654, EN AW-5654A, EN AW-5754, EN AW-5356, EN AW-5356A, EN AW-5456, EN AW-5456A, EN AW-5456B, EN AW-5556A, EN AW-5556B, EN AW-5657, EN AW-5058, AW-5059, EN AW-5070, EN AW-5082, EN AW-5182, EN AW-5083, EN AW-5183, EN AW-5183, EN AW-5283A, EN AW-5383, EN AW-5086, EN AW-5186, EN AW-5087, EN AW-5187, EN AW-5088. Von diesen eignen sich beispielsweise die Al-Werkstoffe EN AW-5005, EN AW-5005A, EN AW-5083, EN AW-5654A, EN AW-5754 insbesondere für die erfindungsgemäßen Zwecke.

Die aus dem duktilen Al-Werkstoff bestehenden Seitenwandabschnitte sind ebenfalls jeweils so geformt, dass die hinsichtlich der Verformung und Rissbildung kritischen Bereiche vom schlechter verformbaren Bodenabschnitt wegverlegt sind. Hierzu können die duktilen Seitenwandabschnitte eine bodenseitige erste Seitenwandzone aufweisen, die nach Art einer seitlichen Verlängerung an den jeweils zugeordneten Rand des Bodenabschnitts angeschlossen ist und erst nach einem gewissen Abstand zum schlechter verformbaren Bodenabschnitt in den Eckbereich übergeht, über den die in einem größeren Winkel in Bezug auf den Bodenabschnitt ausgerichtete Zone der Seitenwand an den Bodenabschnitt angebunden ist. Diese Ausgestaltung ist insbesondere bei denjenigen duktilen Seitenwandabschnitten zweckmäßig, die entlang der Fügenaht verlaufen, über die der jeweilige aus duktilem Material bestehende Abschnitt eines erfindungsgemäßen Batterieträgers an dessen aus höherfestem Material bestehenden Abschnitt angeschlossen ist. Durch eine solche Ausgestaltung der duktilen Seitenwandabschnitte können Belastungen, die bei der Formgebung oder im Gebrauch des Batteriegehäuses auftreten können, von der Fügeverbindung ferngehalten werden. Dies trägt ebenfalls zur Minimierung der Gefahr einer Rissbildung im Bereich der betreffenden Fügeverbindung bei.

Nach der Umformung der erfindungsgemäß beschaffenen Blechplatine (Arbeitsschritte a) und b) des erfindungsgemäßen Verfahrens kann das erhaltene Batterieträgerbauteil in an sich bekannter Weise jeweils weitere Umformschritte durchlaufen, um beispielsweise an der Seitenwand oder dem Bodenabschnitt weitere Formelemente auszubilden. Bei diesen Formelementen kann es sich beispielsweise um einen Flansch, der zum Befestigen des Batterieträgers an einer Fahrzeugkarosserie genutzt werden kann, um Sicken oder andere Strukturierungen, die zur Aussteifung des jeweiligen Seitenwandabschnitts dienen, oder um Einsenkungen, Vorsprünge oder desgleichen handeln, die zum Fixieren, Anschlagen oder Positionieren der im Batterieträger anzuordnenden Batterieelemente genutzt werden können.

Ebenso optional kann der nach dem Umformvorgang erhaltene Batterieträger in an sich ebenso bekannter Weise in einem Randbereich der umlaufenden Seitenwand beschnitten werden, um überschüssiges Blechmaterial zu entfernen.

Erforderlichenfalls können schließlich ebenso optional auch Öffnungen in den Batterieträger eingeformt, insbesondere eingestanzt oder eingebohrt, werden, die für die Befestigung des Batterieträgers an einer Fahrzeugkarosserie oder für Hilfsmittels zur Befestigung der Batterieelemente in dem Batterieträger benötigt werden.

Nachfolgend wird die Erfindung anhand einer ein Ausführungsbeispiel darstellenden Zeichnung näher erläutert. Es zeigen jeweils schematisch:
- Fig. 1: eine Blechplatine für die Herstellung eines Batterieträgers in Draufsicht;
- Fig. 1a: die Einzelteile, aus denen die Blechplatine gemäß Fig. 1 zusammengesetzt ist, in Draufsicht;
- Fig. 2: ein aus der Blechplatine gemäß Fig. 1 durch eine Tiefziehoperation geformtes Rohteil in Draufsicht;
- Fig. 3: das Rohteil nach einem Beschnitt in Draufsicht;
- Fig. 4: das Rohteil nach einer weiteren Umformung in Draufsicht;
- Fig. 5: den fertigen Batterieträger in Draufsicht;
- Fig. 6: den fertigen Batterieträger in einer perspektivischen Ansicht auf seine Unterseite.

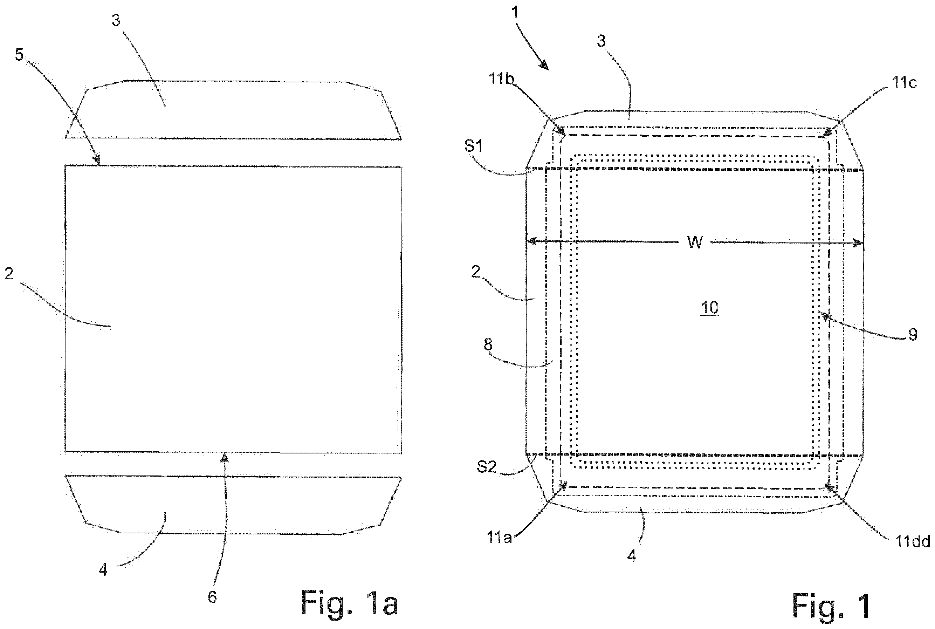

Die für die Herstellung des Batterieträgers B bereitgestellte, in Fig. 1 gezeigte Blechplatine 1 ist aus einem zentralen Abschnitt 2 und zwei Seitenabschnitten 3,4 zusammengesetzt. Der in Draufsicht rechteckige zentrale Abschnitt 2 erstreckt sich über die gesamte Breite W der Blechplatine 1 und nimmt den überwiegenden Teil, hier etwa fünf Siebtel, ihrer Länge L ein. Jeweils einer der identisch geformten Seitenabschnitte 3,4 ist mit seinem jeweils zugeordneten Rand mit einem der quer zur Längserstreckung der Blechplatine 1 ausgerichteten Rändern 5,6 des zentralen Abschnitts 2 verbunden, insbesondere verschweißt.

Die Verbindung der Seitenabschnitte 3,4 mit dem zentralen Abschnitt 2 kann durch eine Vielzahl von Fügeverfahren vorgenommen werden, das sich im Stand der Technik für die Erzeugung dauerhaft dichter und beständiger Fügenähte bewährt hat. Hierzu zählen insbesondere die bei der Herstellung von Tailored Welded Blanks aus Aluminiumblechen regelmäßig eingesetzten Laserschweiß- oder Reibrührschweißverfahren. Zur Herstellung der Verbindung werden die Seitenabschnitte 3,4 bevorzugt stumpf gegen die Ränder 5,6 des zentralen Abschnitts 2 ausgerichtet, um möglichst flache Fügenähte S1,S2 zu erhalten.

In Fig. 1 ist der Verlauf des äußeren Rands eines umlaufenden Randabschnitts 8 des aus der Blechplatine 1 zu erzeugenden Batterieträgers B strichpunktiert dargestellt.

Der zentrale Abschnitt 2 und die Seitenabschnitte 3,4 sind jeweils aus 3 mm dicken Blechen geschnitten worden. Der zentrale Abschnitt besteht dabei aus dem höherfesten Aluminiumwerkstoff AA6063 im T6-Zustand, während die zwei duktilen Seitenabschnitte 3,4 aus dem duktileren Aluminiumwerkstoff AA5754 im 0-Zustand bestehen. Im T6-Zustand weist der Al-Werkstoff AA6063 eine Zugfestigkeit Rm von 260 MPa und eine Bruchdehnung A von 7 % auf. Dagegen beträgt beim Al-Werkstoff AA5754 im 0-Zustand die Zugfestigkeit Rm 230 MPa und die Bruchdehnung A 22 %.

Mit gestrichelter Linie ist in Fig. 1 zusätzlich ein zentraler Bodenabschnitt 9 des herzustellenden Batterieträgers B umgrenzt.

Die gepunkteten Linien deuten in Fig. 1 eine in den Bodenabschnitt 9 des herzustellenden Batterieträgers B eingeformte Einsenkung 10 an.

Dies verdeutlicht, dass bei der Blechplatine 1 die flächige Erstreckung der Seitenabschnitte 3,4 und des zentralen Abschnitts 2 so gewählt sind, dass die hinsichtlich des Umformverhaltens kritischen Eckbereiche 11a - 11d der um den zentralen Bodenabschnitt 9 umlaufenden Seitenwand 12 des herzustellenden Batterieträgers B in den duktilen Seitenabschnitten 3,4 ausgeformt werden. Dagegen ist ein wesentlicher Teil der Länge der geradlinig und parallel zueinander entlang der Längsseiten L1,L2 des Batterieträgers B verlaufenden und daher einfach zu formenden Seitenwandabschnitte 13,14 des herzustellenden Batterieträgers B aus dem höherfesten Al-Werkstoff des zentralen Abschnitts 2 der Blechplatine 1 geformt.

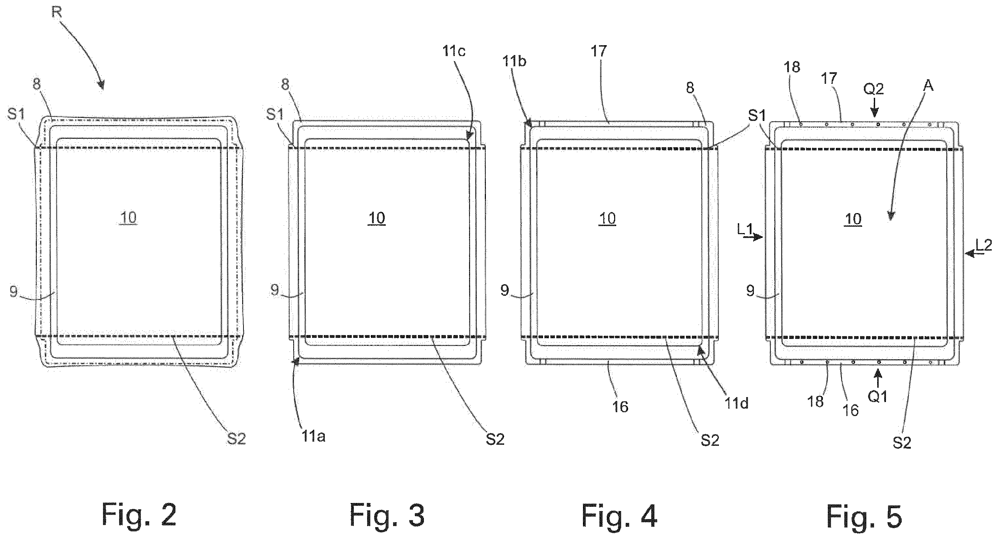

Zur Umformung in den Batterieträger B wird die Blechplatine 1 in eine konventionelle, hier nicht gezeigte Presse eingelegt, deren Stempel und Matrize entsprechend der gewünschten Formgebung des Batterieträgers B geformt sind. Mittels der Presse wird aus der Blechplatine 1 ein Rohteil R geformt, dessen Grundform bereits weitestgehend der Form des fertigen Batterieträgers B entspricht (Fig. 2).

Das Rohteil R weist daher bereits den aus dem zentralen Abschnitt 2 der Blechplatine 1 geformten zentralen Bodenabschnitt 9 mit einer in ihn eingeformten Einsenkung 10, die um den Bodenabschnitt 9 umlaufende Seitenwand 12 und den nach Art eines Kragens seitlich von der Seitenwand 12 abstehenden, um den Batterieträger B umlaufenden Randabschnitt 8 auf.

Der Randabschnitt 8 wird im folgenden Arbeitsschritt entlang des durch die strichpunktierte Linie (Fig. 1,2) angedeuteten äußeren Randes des Randabschnitts 8 beschnitten, um überschüssige Blechabschnitte zu entfernen (Fig. 3).

Anschließend wird das Rohteil R einer weiteren Umformung unterzogen, bei der die Bereiche des Randabschnitts 8, die parallel zu den Rändern 5,6 bzw. den Fügenähten S1,S2 verlaufen, mit einer sich über annähernd die gesamte Breite der betreffenden Bereiche erstreckenden Einsenkung 16,17 versehen werden (Fig. 4).

Abschließend werden in die Einsenkungen 16,17 des Randabschnitts 8 beispielsweise durch eine Stanzoperation in gleichmäßigen Abständen angeordnete Durchgangsöffnungen 18 eingebracht, die zur später erfolgenden Befestigung des fertigen Batterieträgers B an einer hier nicht dargestellten Fahrzeugkarosserie oder, bevorzugt, zur Befestigung eines hier ebenfalls nicht gezeigten Deckels an dem Batterieträger B genutzt werden können (Fig. 5).

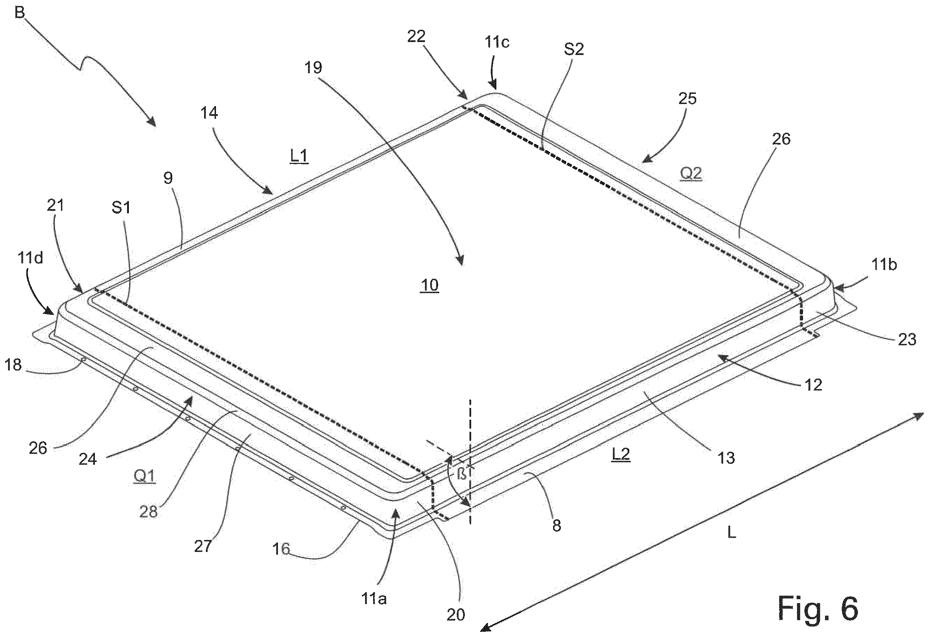

Der so erhaltene, in Fig. 6 "auf dem Kopf liegend", also mit Sicht auf seine Unterseite 19, dargestellte Batterieträger B hat somit einen zentralen Bodenabschnitt 9. In den Bodenabschnitt 9 ist die Einsenkung 10 eingeformt, die sich bis auf einen um sie herumlaufenden Rand über annähernd die gesamte Fläche des Bodenabschnitts 9 erstreckt.

Um den Bodenabschnitt 9 herum läuft die Seitenwand 12. Die Seitenwand 12 ist bezogen auf den Bodenabschnitt 9 so winklig angeordnet, dass zwischen ihr und dem Bodenabschnitt 9 ein Winkel ß von ca. 90° eingeschlossen ist. Dabei umfasst die Seitenwand 12 die aus dem höherfesten Al-Werkstoff des Bodenabschnitts 9 bestehenden Seitenwandabschnitte 13,14, die sich längs der Längsseiten L1,L2 des Batterieträgers B erstrecken und in einem Stück mit dem zentralen Bodenabschnitt 9 aus dem zentralen Abschnitt 2 der Blechplatine 1 geformt sind. An ihren den Eckbereichen 11a - 11d des Batterieträgers B zugeordneten Enden sind die höherfesten Seitenwandabschnitte 13,14 der Seitenwand 12 durch kurze Seitenwandabschnitte 20,21,22,23 verlängert, die jeweils aus den Seitenabschnitten 3,4 der Blechplatine 1 geformt sind. Die kurzen, duktilen Seitenwandabschnitte 20 - 23 treffen in dem ihnen jeweils zugeordneten Eckbereich 11a - 11d auf jeweils einen weiteren duktilen Seitenwandabschnitt 24,25 der Seitenwand 12, der ebenfalls aus jeweils einem der duktilen Seitenabschnitte 3,4 geformt ist und sich parallel zu den Fügenähten S1,S2 entlang der jeweiligen Querseite Q1,Q2 des Batterieträgers B erstreckt.

Beim Batterieträger B sind somit alle hinsichtlich der Umformung und der Gefahr von Rissbildung problematischen Bereiche, insbesondere die Eckbereiche 11a - 11d, in den aus duktilem Al-Werkstoff bestehenden Abschnitten angeordnet, während der zentrale Bodenabschnitt 9 und die den Längsseiten L1,L2 zugeordneten Seitenwandabschnitte 13,14, die mit dem Bodenabschnitt 9 die Hauptlast der von dem Batterieträger B aufzunehmenden Batterieelemente zu tragen haben, aus höherfestem Al-Werkstoff bestehen.

Die Fügenähte S1,S2 werden dabei ebenfalls dadurch gegen Belastungen bei der Formgebung des Batterieträgers B geschont, dass die beim Umformen kritischen Bereiche von ihnen weg in die duktilen Abschnitte des Batterieträgers B verlegt sind. Hierzu sind die aus dem duktilen Al-Werkstoff bestehenden Seitenwandabschnitte 24,25 so geformt, dass sie eine bodenseitige erste Seitenwandzone 26, die an ihrem dem Bodenabschnitt 9 zugeordneten Randbereich mit dem äußeren Randbereich des Bodenabschnitts 9 gefügt ist, und eine seitliche Verlängerung des Bodenabschnitts 9 bildet, eine gegenüber ihrer ersten Seitenwandzone 26 und dem Bodenabschnitt 9 abgewinkelt ausgerichtete zweite Seitenwandzone 27, sowie eine Übergangszone 28 umfassen, über die die erste Seitenwandzone 26 in die zweite Seitenwandzone 27 übergeht.

Durch die erfindungsgemäße Auslegung und Gestaltung des Batterieträgers B gelingt es, eine dauerhaft dichte Abschirmung und einen ebenso zuverlässig stabilen Halt von hier nicht gezeigten Batterieelementen zu gewährleisten, die zum Gebrauch in dem Aufnahmeraum AR angeordnet werden, den der Batterieträger B umgrenzt.

### BEZUGSZEICHEN

- 1: Blechplatine
- 2: zentraler Abschnitt der Blechplatine 1
- 3,4: Seitenabschnitte der Blechplatine 1
- 5,6: Ränder des zentralen Abschnitts 2
- 8: Randabschnitt des Batterieträgers B
- 9: zentraler Bodenabschnitt des Batterieträgers B
- 10: in den Bodenabschnitt eingeformte Einsenkung
- 11a - 11d: Eckbereiche der Seitenwand
- 12: Seitenwand
- 13,14: höherfeste Seitenwandabschnitte
- 16,17: Einsenkungen des Randabschnitts 8 (Formelemente)
- 18: Durchgangsöffnungen
- 19: Unterseite des Batterieträgers B
- 20 - 23: kurze duktile Seitenwandabschnitte
- 24,25: duktile Seitenwandabschnitte
- 26: bodenseitige erste Seitenwandzone der duktilen Seitenwandabschnitte 24,25
- 27: zweite Seitenwandzone der duktilen Seitenwandabschnitte 24,25
- 28: Übergangszone der duktilen Seitenwandabschnitte 24,25
- ß: Winkel zwischen der Seitenwand 12 und dem Bodenabschnitt 9
- AR: Aufnahmeraum
- B: Batterieträger
- L: Länge der Blechplatine 1
- L1,L2: Längsseiten des Batterieträgers B
- Q1,Q2: Querseiten des Batterieträgers B
- R: Rohteil
- S1,S2: Fügenähte
- W: Breite der Blechplatine 1

## Patentansprüche

1. Batterieträger, der zum Befestigen in einem Bodenbereich einer Tragstruktur eines elektrisch angetriebenen Kraftfahrzeugs vorgesehen ist, wobei der Batterieträger (B) mit einem Bodenabschnitt (9) und einer um den Bodenabschnitt (9) umlaufenden Seitenwand (12) einen Aufnahmeraum (AR) für mindestens ein dort zu positionierendes Batterieelement umgrenzt und wobei die Seitenwand (12) mindestens zwei Seitenwandabschnitte (13,14,20-25) umfasst, die unter einem Winkel (ß) von mehr als 0° gegenüber dem Bodenabschnitt (9) angewinkelt ausgerichtet sind und in einem Eckbereich (11a-11d) aufeinandertreffen, **dadurch gekennzeichnet,**
**dass** der Bodenabschnitt (9) des Batterieträgers (B) in einem Stück aus einem ersten Aluminiumwerkstoff geformt ist,
und
**dass** von der Seitenwand (12) zumindest jeweils in einem der Eckbereiche (11a-11d) aufeinandertreffende Seitenwandabschnitte (20-23,24,25) einschließlich des jeweiligen Eckbereichs (11a-11d) in einem Stück aus einem zweiten Aluminiumwerkstoff geformt sind, der eine gegenüber dem ersten Aluminiumwerkstoff höhere Bruchdehnung A aufweist.

2. Batterieträger nach Anspruch 1, **dadurch gekennzeichnet, dass** der erste Aluminiumwerkstoff eine Zugfestigkeit Rm von mindestens 170 MPa und eine Bruchdehnung A von weniger als 10 % aufweist.

3. Batterieträger nach Anspruch 1 oder 2, **dadurch gekennzeichnet, dass** der zweite Aluminiumwerkstoff eine Bruchdehnung A von mindestens 10 % aufweist.

4. Batterieträger nach einem der voranstehenden Ansprüche, **dadurch gekennzeichnet, dass** der Batterieträger (B) an zwei gegenüberliegenden Seiten (L1,L2) jeweils einen Seitenwandabschnitt (13,14) aufweist, der in einem Stück mit dem Bodenabschnitt (9) aus dem ersten Aluminiumwerkstoff geformt ist, und **dass** jeweils einer der Seitenwandabschnitte (20 - 23), die zwischen sich einen Eckbereich (11a-11d) des Batterieträgers (B) haben, eine Verlängerung eines der aus dem zweiten Aluminiumwerkstoff des Bodenabschnitts (9) bestehenden Seitenwandabschnitte (20-23) bildet.

5. Batterieträger nach Anspruch 4, **dadurch gekennzeichnet,**
**dass** der Bodenabschnitt (9) in Draufsicht betrachtet eine rechteckige Grundform aufweist, **dass** an zueinander gegenüberliegenden Längsseiten (L1,L2) des Bodenabschnitts (9) sich jeweils einer dem ersten Aluminiumwerkstoff bestehenden Seitenwandabschnitte (13,14) erstreckt, und **dass** die aus dem ersten Aluminiumwerkstoff bestehenden Seitenwandabschnitte (13,14) an ihren den Eckbereichen (11a-11d) des Batterieträgers (B) zugeordneten Seiten jeweils durch einen mit ihnen gefügten,aus dem zweiten Aluminiumwerkstoff bestehenden Seitenwandabschnitt verlängert sind.

6. Batterieträger nach Anspruch 5, **dadurch gekennzeichnet, dass** die höherfesten Seitenwandabschnitte (13,14) parallel zueinander verlaufen.

7. Batterieträger nach einem der voranstehenden Ansprüche, **dadurch gekennzeichnet, dass** der erste Werkstoff eine Aluminiumlegierung der 6000, 7000 oder 8000 Serie (AIMgSi) und der zweite Aluminiumwerkstoff eine Aluminiumlegierung der 3000, 4000 oder 5000 Serie (AlMg) ist.

8. Verfahren zum Herstellen eines Batterieträgers (B), der zum Befestigen in einem Bodenbereich einer Tragstruktur eines elektrisch angetriebenen Kraftfahrzeugs vorgesehen ist, wobei der Batterieträger (B) mit einem Bodenabschnitt (9) und einer um den Bodenabschnitt (9) umlaufenden Seitenwand (12) einen Aufnahmeraum (AR) für dort zu positionierende Batterieelemente umgrenzt und wobei die Seitenwand (12) mindestens zwei Seitenwandabschnitte (13,14,20-23,24,25) umfasst, die unter einem Winkel ß von mehr als 0° gegenüber dem Bodenabschnitt (9) angewinkelt ausgerichtet sind und in einem Eckbereich (11a-11d) aufeinandertreffen, umfassend folgende Arbeitsschritte:
a) Bereitstellen einer Blechplatine (1), die einen zentralen Abschnitt (2), der aus einem ersten Aluminiumwerkstoff besteht, und mindestens zwei Seitenabschnitte (3,4) umfasst, die mit ihrem jeweils zugeordneten Rand an einander gegenüberliegende Ränder (5,6) des zentralen Abschnitts (2) gefügt sind und zumindest abschnittsweise aus einem zweiten Aluminiumwerkstoff bestehen, wobei der erste Aluminiumwerkstoff eine Bruchdehnung A aufweist, die geringer ist als die Bruchdehnung A des zweiten Aluminiumwerkstoffs;
b) Umformen der Blechplatine (1) zu dem Batterieträger (B) unter Ausbildung eines Bodenabschnitts (9) und einer um den Bodenabschnitt (9) umlaufenden Seitenwand (12) des Batterieträgers (B), wobei im Zuge der Umformung die Eckbereiche (11a-11d), in denen zwei Seitenwandabschnitte (20 - 23,24,25) der Seitenwand (12) aufeinander treffen, ausschließlich aus den aus dem zweiten Aluminiumwerkstoff bestehenden Abschnitten (3,4) der Blechplatine (1) geformt werden;
c) Optionales Beschneiden eines Randbereichs (8) der umlaufenden Seitenwand (12);
d) Optionales zusätzliches Umformen der Seitenwand (12) oder des Bodenabschnitts (9) zur Ausprägung mindestens eines zusätzlichen Formelements (16,17);
e) Optionales Einbringen von Öffnungen (18) in den Batterieträger (B).

9. Verfahren nach Anspruch 8, **dadurch gekennzeichnet, dass** der zentrale Abschnitt (2) der im Arbeitsschritt a) bereitgestellten Blechplatine (1) sich über die gesamte Breite (W) der Blechplatine (1), jedoch nur über ein Teilstück der Länge (L) der Blechplatine (1) erstreckt, und dass bei der Umformung im Arbeitsschritt b) die zueinander gegenüberliegenden, sich zwischen den duktilen Seitenabschnitten (3,4) der Blechplatine (1) erstreckenden Randabschnitte des zentralen Abschnitts (2) zu jeweils einem höherfesten Seitenwandabschnitt (13,14) des Batterieträgers (B) umgeformt werden.

10. Verfahren nach Anspruch 9, **dadurch gekennzeichnet, dass** die aus dem ersten Aluminiumwerkstoff bestehenden Seitenwandabschnitte (13,14) parallel zueinander verlaufen.

## Claims

1. Battery carrier which is provided for being fastened in a floor region of a supporting structure of an electrically driven motor vehicle, wherein the battery carrier (B) delimits a receiving space (AR) for at least one battery element to be positioned there with a floor section (9) and a side wall (12) circulating the floor section (9) and wherein the side wall (12) comprises at least two side wall sections (13, 14, 20-25) which are aligned at an angle (ß) of more than 0° with respect to the floor section (9) and meet in a corner region (11a-11d),
**characterized in that**
the floor section (9) of the battery carrier (B) is formed in one piece from a first aluminum material, and
side wall sections (20-23, 24, 25) of the side wall (12) meeting each other at least in one of the corner regions (11a-11d), including the respective corner region (11a-11d), are formed in one piece from a second aluminum material which has a higher elongation at break A than the first aluminum material.

2. Battery carrier according to claim 1, **characterized in that** the first aluminum material has a tensile strength Rm of at least 170 MPa and an elongation at break A of less than 10%.

3. Battery carrier according to claim 1 or 2, **characterized in that** the second aluminum material has an elongation at break A of at least 10%.

4. Battery carrier according to one of the preceding claims, **characterized in that** the battery carrier (B) has on two opposite sides (L1, L2) respectively a side wall section (13, 14) which is formed in one piece with the floor section (9) from the first aluminum material, and **in that** respectively one of the side wall sections (20-23), which have a corner region (11a-11d) of the battery carrier (B) between them, forms an extension of one of the side wall sections (20-23) consisting of the second aluminum material of the floor section (9).

5. Battery carrier according to claim 4, **characterized in that**
the floor section (9) has a rectangular basic shape when viewed from above, one of the side wall sections (13, 14) consisting of the first aluminum material respectively extends at longitudinal sides (L1, L2) opposite to each other of the floor section (9), and
the side wall sections (13, 14) consisting of the first aluminum material are respectively extended on their sides associated with the corner regions (11a-11d) of the battery carrier (B) by a side wall section joined to them and consisting of the second aluminum material.

6. Battery carrier according to claim 5, **characterized in that** the higher-strength side wall sections (13, 14) run parallel to each other.

7. Battery carrier according to one of the preceding claims, **characterized in that** the first material is an aluminum alloy of the 6000, 7000 or 8000 series (AlMgSi) and the second aluminum material is an aluminum alloy of the 3000, 4000 or 5000 series (AlMg).

8. Method for producing a battery carrier (B) which is provided for being fastened in a floor region of a supporting structure of an electrically driven motor vehicle, wherein the battery carrier (B) delimits a receiving space (AR) for battery elements to be positioned there with a floor section (9) and a side wall (12) circulating the floor section (9), and wherein the side wall (12) comprises at least two side wall sections (13, 14, 20-23, 24, 25) which are aligned at an angle ß of more than 0° with respect to the floor section (9) and meet in a corner region (11a-11d), comprising the following steps:
a) providing a sheet metal blank (1) which comprises a central section (2), which consists of a first aluminum material, and at least two side sections (3, 4) which are joined with their respective associated edge to opposite edges (5, 6) of the central section (2) and consist at least partly of a second aluminum material, the first aluminum material having an elongation at break A which is less than the elongation at break A of the second aluminum material;
b) forming the sheet metal blank (1) into the battery carrier (B) by forming a floor section (9) and a side wall (12) of the battery carrier (B) circulating the floor section (9), wherein in the course of the forming the corner regions (11a-11d), in which two side wall sections (20-23, 24, 25) of the side wall (12) meet, are formed exclusively from the sections (3, 4) of the sheet metal blank (1) consisting of the second aluminum material;
c) Optional trimming of an edge area (8) of the circumferential side wall (12);
d) Optional additional forming of the side wall (12) or the floor section (9) to form at least one additional shaping element (16, 17);
e) Optional insertion of openings (18) in the battery carrier (B).

9. Method according to claim 8, **characterized in that**
the central section (2) of the sheet metal blank (1) provided in step a) extends over the entire width (W) of the sheet metal blank (1), but only over a section of the length (L) of the sheet metal blank (1), and
during the forming in step b), the mutually opposite edge sections of the central section (2) extending between the ductile side sections (3, 4) of the sheet metal blank (1) are each formed into a higher-strength side wall section (13, 14) of the battery carrier (B).

10. Method according to claim 9, **characterized in that** the side wall sections (13, 14) consisting of the first aluminum material run parallel to one another.

## Revendications

1. Porte-batterie prévu pour être fixé dans une zone de fond d'une structure porteuse d'un véhicule automobile à entraînement électrique, le porte-batterie (B) délimite, par une section de fond (9) et une paroi latérale (12) entourant la section de fond (9), un espace disponible (AR) pour au moins un élément de batterie à y positionner, et la paroi latérale (12) comporte au moins deux sections de paroi latérale (13, 14, 20-25) qui sont inclinées et orientées selon un angle (ß) supérieur à 0° par rapport à la section de fond (9) et qui se rejoignent dans une zone d'angle (11a-11d),
caractériser par,
la section de fond (9) du porte-batterie (B) est formée d'une seule pièce dans un premier matériau d'aluminium,
et
que des sections de paroi latérale (20-23, 24, 25), qui partent de la paroi latérale (12) et qui se rejoignent dans au moins une des zones d'angle (11a-11d), sont formées, y compris la zone d'angle respective (11a-11d), d'une seule pièce dans un deuxième matériau d'aluminium qui présente un allongement à la rupture A supérieur à celui du premier matériau d'aluminium.

2. Porte-batterie selon la revendication 1, **caractérisé en ce que** le premier matériau d'aluminium présente une résistance à la traction Rm d'au moins 170 MPa et un allongement à la rupture A inférieur à 10 %.

3. Porte-batterie selon la revendication 1 ou 2, **caractérisé en ce que** le deuxième matériau d'aluminium présente un allongement à la rupture A d'au moins 10 %.

4. Porte-batterie selon l'une des revendications précédentes, **caractérisé en ce que** le porte-batterie (B) présente sur deux côtés opposés (L1, L2) respectivement une section de paroi latérale (13, 14) qui est formée d'une seule pièce avec la section de fond (9) dans le premier matériau d'aluminium, et **en ce que** respectivement l'une des sections de paroi latérale (20 - 23), qui ont entre elles une zone d'angle (11a - 11d) du porte-batterie (B), forme un prolongement de l'une des sections de paroi latérale (20 - 23) constituées du deuxième matériau d'aluminium de la section de fond (9).

5. Porte-batterie selon la revendication 4, **caractérisé en ce que** la section de fond (9), vue de dessus, présente une forme de base rectangulaire, **en ce que** sur des côtés longitudinaux (L1, L2) mutuellement opposés de la section de fond (9) s'étend respectivement une section de paroi latérale (13, 14) composée du premier matériau d'aluminium, et **en ce que** les sections de paroi latérale (13, 14) composées du premier matériau d'aluminium sont prolongées, sur leurs côtés associés aux zones d'angle (11a-11d) du porte-batterie (B), par une section de paroi latérale composée du deuxième matériau d'aluminium, qui est assemblée avec elles.

6. Porte-batterie selon la revendication 5, **caractérisé en ce que** les sections de paroi latérale (13, 14) à haute résistance s'étendent parallèlement l'une à l'autre.

7. Porte-batterie selon l'une des revendications précédentes, **caractérisé en ce que** le premier matériau est un alliage d'aluminium de la série 6000, 7000 ou 8000 (AlMgSi) et le second matériau d'aluminium est un alliage d'aluminium de la série 3000, 4000 ou 5000 (AlMg).

8. Procédé de fabrication d'un porte-batterie (B), prévu pour être fixé dans une zone de fond d'une structure porteuse d'un véhicule automobile à entraînement électrique, le porte-batterie (B) délimite, par une section de fond (9) et une paroi latérale (12) entourant la section de fond (9), un espace disponible (AR) pour au moins un élément de batterie à y positionner, et la paroi latérale (12) comporte au moins deux sections de paroi latérale (13, 14, 20-25) qui sont inclinées et orientées selon un angle (ß) supérieur à 0° par rapport à la section de fond (9) et qui se rejoignent dans une zone d'angle (11a-11d), comprenant les étapes de travail suivantes :
a) Mise à disposition d'une platine de tôle (1) qui comprend une section centrale (2) qui est constituée d'un premier matériau d'aluminium et d'au moins deux sections latérales (3, 4) qui sont reliées par leur bord respectif associé à des bords opposés (5, 6) l'un à l'autre de la section centrale (2) et qui sont composées au moins par sections d'un deuxième matériau d'aluminium, pendant que le premier matériau d'aluminium présente un allongement à la rupture A qui est inférieur à l'allongement à la rupture A du deuxième matériau d'aluminium ;
b) Déformation de la platine de tôle (1) en porte-batterie (B) en formant une section de fond (9) et une paroi latérale (12) du porte-batterie (B) entourant la section de fond (9), les zones de d'angle (11a-11d), dans lesquelles deux sections de paroi latérale (20-23, 24, 25) de la paroi latérale (12) se rejoignent, étant formées au cours de la déformation exclusivement à partir des sections (3, 4) de la platine de tôle (1) composées du deuxième matériau d'aluminium;
c) Découpe optionnelle d'une zone de bord (8) de la paroi latérale périphérique (12) ;
d) Déformation supplémentaire optionnelle de la paroi latérale (12) ou de la section de fond (9) pour former au moins un élément de forme supplémentaire (16, 17);
e) Fabrication optionnelle d'ouvertures (18) dans le porte-batterie (B).

9. Procédé selon la revendication 8, **caractérisé en ce que** la section centrale (2) de la platine de tôle (1) mis à disposition à l'étape de travail a) s'étend sur toute la largeur (W) de la platine de tôle (1), mais seulement sur une partie de la longueur (L) de la platine de tôle (1), et **en ce que**, lors de la déformation dans l'étape de travail b), les sections de bord de la section centrale (2) opposées l'une à l'autre et s'étendant entre les sections latérales ductiles (3, 4) de la platine de tôle (1) sont formées chacune en une section de paroi latérale (13, 14) à haute résistance du porte-batterie (B).

10. Procédé selon la revendication 9, **caractérisé en ce que** les sections de paroi latérale (13, 14) composées du premier matériau d'aluminium s'étendent parallèlement l'une à l'autre.
